# EUROPÄISCHE PATENTSCHRIFT

(11) **EP 0 345 214 B1**
(45) Veröffentlichungstag und Bekanntmachung des Hinweises auf die Patenterteilung: **11.08.1993**
(21) Anmeldenummer: 89810344.5
(22) Anmeldetag: 09.05.1989
(51) Int. Cl.: F16C 17/22, F16C 27/02, F04D 29/04

(54) **Lager mit einer Welle, Pumpe mit einem derartigen Lager und Verwendung der Pumpe**
Bearing comprising a shaft, pump comprising such a bearing and use of the pump
Palier comprenant un arbre, pompe comprenant un tel palier et utilisation d'une telle pompe

(30) Priorität: 30.05.1988 CH 2049/88
(43) Veröffentlichungstag der Anmeldung: 06.12.1989
(73) Patentinhaber: SULZER PUMPEN AG, CH-8401 Winterthur (CH)
(72) Erfinder: Meuter, Paul, CH-8474 Welsikon (CH); Bont, Hans, CH-8500 Frauenfeld (CH)

(56) Entgegenhaltungen:
- CH-A- 341 362
- CH-A- 492 138
- FR-A- 1 198 623
- FR-A- 2 590 594
- G.Willimann,"Basis für die konstruktive Gestaltung keramischer Bauteile", Konstruktion 38(1986), Heft 9, S.341-347, Metals Handbook, 9th Edition, vol.3,1980, American Society for Metals;

## Beschreibung

Die vorliegende Erfindung bezieht sich auf ein Lager für eine Welle nach dem Oberbegriff von Anspruch 1, Pumpe mit einem derartigen Lager und die Verwendung der Pumpe.

Bisherige Lager, machen es erforderlich, deren einzelne Teile, wie Lagerhülse und deren Halterung, aber auch die Welle selbst, unter Berücksichtigung von deren thermischen Ausdehnungs-Eigenschaften, weitgehend auf deren Grösse im Arbeits-Temperaturbereich zu dimensionieren, um die Lagereigenschaften zu optimieren. Diese Anpassung durch Dimensionieren hat sich als besonders schwierig erwiesen, wenn als Lagerhülse beispielsweise eine Sinterkeramik, Silizium-Karbid (SiC) oder sonst ein Werkstoff verwendet wird, der gegenüber den gewöhnlich für Wellen verwendeten Werkstoffen, doch deutlich verschiedene Wärmeausdehnungs-Eigenschaften aufweist. Darüberhinaus sind keramische Werkstoffe und auch Sinterkeramik wohl stark druckbelastbar, d.h. sie sind sehr druckfest. Hingegen weisen diese Werkstoffe nur geringe Zugfestigkeit auf. Diese Werkstoffe weisen zwar viele Eigenschaften auf, die sie für Lager ausgezeichnet geeignet machen.

Bei der Konstruktion ist aber streng darauf zu achten, dass Zugbelastungen in den zulässigen niedrigen Bereichen bleiben. Dies verlangt u.a. hohe Fertigungsgenauigkeit und das Vermeiden des Betriebs ausserhalb der Betriebstemperatur. Weiter sind allzu schnelle Temperaturwechsel zu vermeiden. Kleine Fertigungsungenauigkeiten und/oder allzu drastische Temperaturänderungen können bei derartigen Konstruktionen zu Lagerschäden führen.

Aus der französichen Patentschrift FR-A-1.198.623 ist ein Lager gemäss dem Oberbegriff des unabhängigen Anspruchs 1 bekannt, bei dem das Material der Lagerhülsen und der Halterung im Arbeitstemperaturbereich aber stark unterschiedliche Wärme-Ausdehnungskoeffizienten aufweisen. Die Lagerschale kann z.B. aus Wolframkarbid sein und die Halterung aus rostreiem Stahl. Die Konstruktion ist derart gewählt, dass sie unterschiedliche Wärmeausdehnung von Lagerschale und Halterung zulässt und die Unterschiede in der Wärmeausdehnung zwischen Lagerschale und Halterung durch Verformung ausgleicht. Diese Konstruktionsart stellt hohe Anforderungen an die Dimensionierung und Formgebung der Halterung, wenn der feste Sitz der Lagerschale in der Halterung gewährleistet werden soll.

Aufgabe der Erfindung ist es, ein Lager zu schaffen, das auf einfache Weise und mit geringem Aufwand den Sitz der Lagerschale gewährleistet. Ein derartiges Lager ist erfindungsgemäss durch die Merkmale des kennzeichnenden Teils von Anspruch 1 gekennzeichnet. Die erfinderische Pumpe weist eine Welle auf, die mit mindestens einem derartigen Lager gelagert ist. Weiterhin zeichnet sich die erfindungsgemäße Pumpe in der Weise aus, daß sie zum Fördern von heissen Fördermedien verwendet wird. Die abhängigen Ansprüche beziehen sich auf besonders vorteilhafte Ausführungsformen der Erfindung.

Durch die besondere Anordnung der Stützflächen ergibt sich die Möglichkeit, die verschiedene Ausdehnung von beispielsweise Welle und Lagerhülse bei verschiedenen Temperaturen auf einfache Art auszugleichen bzw. durch Deformation wenigstens eines Teils der Halterung auszugleichen. Die unterschiedliche Ausdehnung von Welle bzw. Achse und Lagerhülse werden durch Deformation von Teilen der Halterung der Lagerhülse ausgeglichen und kompensiert, ohne dass die Lagerhülse unzulässig belastet, insbesondere unzulässig zugbelastet wird. Zudem ist es möglich, den Lagerhülsen für derartige Lager eine einfache Form zu geben, was bei deren Herstellung, insbesondere aus Sinterwerkstoffen, zusätzlich kostenmässige Vorteile bringt. Darüberhinaus gewährleistet die Art der Halterung die einwandfreie Zentrierung der Lagerhülse. Die Publikation G. Willimann, "Basis für die konstruktive Gestaltung keramischer Baustoffe", erschienen in der Zeitschrift Konstruktion 38, (1986), fasst für die Konstruktion von Maschinenteilen wesentliche Eigenschaften keramischer Werkstoffe in einem Ueberblick zusammen. Eigenschaften metallischer Werkstoffe finden sich beispielsweise in Metals Handbook, 9th Edition, Vol. 3, herausgegeben von der American Society for Metals.

Die Erfindung wird anhand der Figuren, welche Beispiele von erfindungsgemässen Lagern bzw. Teile davon zeigen, näher erläutert. Es zeigen:
- Fig. 1: einen Längsschnitt durch den Teil einer Welle mit einem erfindungsgemässen Lager mit einer mehrteiligen Halterung für die Lagerhülse aus Sinterkeramik;
- Fig. 2: die aufgrund der thermischen Ausdehnung der Welle sich einstellende Deformation der Halterung der Lagerhülse des Lagers, schematisch und übertrieben deformiert gezeichnet.

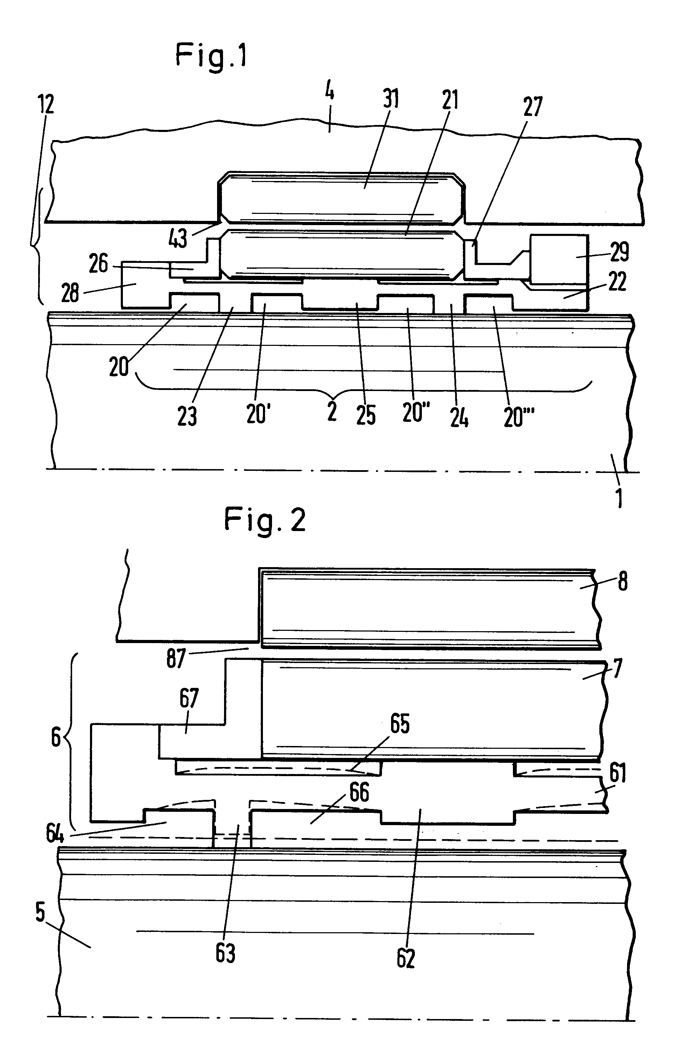

Das in Fig. 1 im Längsschnitt durch Teile von Welle 1 und Lager 12 gezeigte Beispiel der Erfindung, zeigt ein Lager 12 mit einer Halterung 2 für die mit der Welle 1 drehende, innere Lagerhülse 21. Die äussere Lagerhülse 31 ist im feststehenden Gehäuse 4 in der Ringnut 43 eingepasst. Die Lagerhülsen 21, 31 werden auch Lagerbüchsen genannt.

Die Halterung 2 besteht im gezeigten Beispiel aus dem Stützmantel 22, dem die Stützringe 23, 24 und 25 angearbeitet sind. Der Stützmantel 22 ist radial auf der Welle mit den beiden Stützringen 23 und 24 abgestützt, die symmetrisch zum zentralen Stützring 25 angeordnet sind. Dieser Stützring 25 stützt die Lagerhülse 21 innen radial ab und zentriert diese gleichzeitig inbezug auf die Drehachse der Welle.

Axial ist die Lagerhülse 21 durch die beiden im Querschnitt L-förmigen bzw. L-artigen Ringe 26 und 27 positioniert und festgehalten. Der Ring 26 ist in axialer Richtung auf dem Endteil 28 des Stützmantels 22 abgestützt. Der Ring 27 ist auf dem auf den Stützmantel 22 aufgeschraubten Endring 29 abgestützt.

Die Nuten 20, 20′, 20˝ und 20‴ im Stützmantel 22, geben ihm derartige Biege- und Elastizitätseigenschaften, dass bei der Wahl von Materialen, auch mit den richtigen thermischen Ausdehnungs-Eigenschaften der Teile der Halterung 2, die Lagerhülse insbesondere über weite Temperaturbereiche nicht unzulässig auf Zug belastet wird. Die Deformation kann dabei in Wirklichkeit minimal sein und nur im Bereich von Hundertstel- oder Zehntel-Millimetern liegen. Entsprechend sind beispielsweise die Spalten zwischen der Welle 1 und dem Endteil 28 oder der Welle 1 und dem Stützring 25 von derselben Grössenordnung.

Die durch thermisches Ausdehnen bzw. Zusammenziehen der Teile der Halterung auftretenden Deformationen des Stützmantels, wird anhand der schematischen Fig. 2 näher erläutert. Der Werkstoff der Welle bzw. Achse 5 weist einen grösseren thermischen Ausdehnungskoeffizienten auf, als die Teile der Halterung 6. Deren Werkstoff wiederum, weist einen thermischen Ausdehnungskoeffizienten auf, der gleich oder nur unwesesentlich grösser ist als derjenige der Lagerhülse 7. Mit ausgezogenen Linien gezeichnet ist die Lage und Form dieser Teile bei einer Temperatur von beispielsweise 20°C. Mit gestrichelten Linien ist die Form und Lage derselben Teile bei einer Arbeitstemperatur im Bereich von etwa 250°C. Derartige Verhältnisse von Temperaturunterschieden sind beispielsweise für heisslaufenden Pumpen, bei denen heisses Fördermedium gepumpt wird durchaus gegeben. Beim Erwärmen vergrössert sich der Durchmesser der Welle.

Anhand der Zeichnung soll lediglich das Prinzip der erfinderischen Konstruktion dargestellt und erklärt werden. Dementsprechend sind auch nicht Details der Verformung gezeigt. Im wesentlichen ist nur die radiale Verformung und Vergrösserung der Stützhülse 61 dargestellt. Weiter wird eine thermisch verursachte Veränderung der Form der Stützhülse 61 dargestellt. Um die Uebersichtlichkeit der Fig. 2 zu verbessern, wird auf Schraffuren verzichtet. Darüber hinaus ist die Welle 5 radial nur halb gezeigt. Lager, Halterung 6 und Welle 5 sind radial nicht vollständig, sondern gebrochen gezeigt. Es wurde auch darauf verzichtet, die Rotationssymmetrie einzelner Teile der Ausführungsform des Beispiels von Fig. 2 (und übrigens auch von Fig. 1) zeichnerisch darzustellen.

Es ist davon auszugehen, dass die Werkstoffe von Lagerhülse 7 Halterung 6 im zu betrachtenden Temperaturbereich nur unwesentlich verschiedene Wärmeausdehnungskoefffizienten haben. Die Aenderungen der Druckbelastung ist für die beispielsweise aus Sinterkeramik bestehende Lagerhülse 7 nicht kritisch. Dadurch, dass die thermische Ausdehnung der Stützhülse mit Verkürzen durch Biegen wenigstens teilweise kompensiert wird, kann für unsere Betrachtung die axiale Deformation von Lagerhülse 7 und Halterung 6 vernachlässigt werden und ist auch zeichnerisch nicht berücksichtigt.

Bei Temperaturänderungen verändert sich der Durchmesser bzw. Radius der Welle 5 stärker als die Durchmesser der Halterung 6 und auch der Lagerhülse 7. Die nach aussen gerichteten Radialkräfte auf die Lagerhülse 7 steigen aber nicht unbegrenzt. Das Vergrössern des Durchmessers der Welle 5 führt lediglich zu einer Deformation der Stützhülse 61 in der dargestellten Art. Dies ist dadurch möglich, weil die Stützhülse 61 mit den angearbeiteten Stützringen 62 und 63 (ein dritter Stützring ist nicht gezeichnet) die Nuten bzw. Ausnehmungen 64, 65 und 66 (symmetrisch dazu sind weitere Nuten vorhanden) aufweist, die bei der gezeigten Anordnung der Stützringe 62 und 63 sowie der L-förmigen Ringe 67 (der andere ist in Fig. 2 nicht gezeigt) zu der gezeichneten bogen- oder wellenförmigen Deformation der Stützhülse 61 führen. Die durch die Nuten 64, 65 und 66 geschaffenen elastischen Partien verhindern eine Ueberbelastung der Stützhülse 61 aber vor allem auch der wenig zugbelastbaren Lagerhülse 7.

Für die Anwendung im Temperaturbereich von etwa 0°C und 300°C eignen sich z.B. als Werkstoffe für Stützhülse 61, 22, L-förmige Ringe 67, 26, 27 und Endring 29 Werkstoffe wie 58 Fe - 42 Ni oder ähnliche Legierungen, wenn für die Lagerhülse 7, 21 eine Sinterkeramik wie EKasic D verwendet wird. 58 Fe - 42 Ni (α_{T} = 5x10⁻⁶ (thermischer Ausdehnungskoeffizient)) hat ähnlich wie EKasic D Sinterkeramik (α_{T} = 4x10⁻⁶) im Bereich von etwa 0 bis 300°C eine konstantbleibenden thermischen Ausdehnungskoeffizienten. Eine Welle mit einem Durchmesser im Bereich von beispielsweise 30 mm bis 200 mm könnte dann beispielsweise aus dem Werkstoff X20Cr13 (α_{T} = 9x10⁻⁶ bei 0°C und 9x10⁻⁶ bei 400°C) gearbeitet sein. Die Schmierung des Lagers im Spalt 87 zwischen den beiden Lagerhülsen 7, 8 erfolgt durch das Fördermedium.

## Patentansprüche

1. Lager (12) mit einer Welle (1) oder einer Achse, mit einer Halterung (2) für mindestens eine Lagerhülse (21) des Lagers (12), wobei die Halterung (2) ringartig ausgebildet ist und die Lagerhülse (21) im axialen mittleren Bereich (25) an der Halterung (2) ringartig radial abgestützt ist und je seitlich axial beabstandet von diesem mittleren Bereich (25) die Halterung (2) auf der gelagerten Welle (1) oder Achse ringartig radial abgestützt (23, 24) ist, und dass die Halterung (2) die beiden seitlichen Enden der Lagerhülse (21) axial abstützt und festhält, dadurch gekennzeichnet, dass die Halterung (2) aus einem einzigen oder mehreren verschiedenen Werkstoffen besteht, dessen/deren Wärme-Ausdehnungskoeffizient/en wenigstens im Bereich der Arbeitstemperatur von 0°C bis 300°C gleich oder so verschieden von demjenigen des Materials der Lagerhülse (21) ist, dass das Verhältnis der Wärme-Ausdehnungskoeffizienten von Lagerhülse (21) zu Halterung (2) nicht kleiner als 0.8 ist, und der Wärme-Ausdehnungskoeffizient des Materials der Welle (1) oder Achse grösser ist als jener des Materials der Halterung (2) und der der Lagerhülse (21).

2. Lager nach Patentanspruch 1, dadurch gekennzeichnet, dass wenigstens ein ringartig ausgebildeter Teil (61) der Halterung (6) im montierten Zustand, in einem axialen Schnitt, in axialer Richtung betrachtet, bei der Betriebstemperatur mindestens einfach konvex radial nach aussen aufgewölbt ist (Fig. 2).

3. Lager nach einem der Patentansprüche 1 oder 2, dadurch gekennzeichnet, dass die beiden seitlich abstützenden Teile (26, 27) der Halterung (2) von je einem im Axialschnitt L-artig geformten Ring (26, 27) gebildet werden.

4. Lager nach Patentanspruch 3, dadurch gekennzeichnet, dass die beiden im Axialschnitt L-artigen Ringe (26, 27), zwischen denen die Lagerhülse (21) angeordnet ist, auf dem sich auf der Welle (1) radial abstützenden Teil (22) der Halterung (2), zwischen Halteringen (28, 29) angeordnet sind.

5. Lager nach Patentanspruch 4, dadurch gekennzeichnet, dass wenigstens der eine der Halteringe (29) in axialer Richtung auf den abstützenden Teil (22) der Halterung (2) aufgeschraubt ist.

6. Lager nach Patentanspruch 3 oder 4, dadurch gekennzeichnet, dass wenigstens der eine der im Axialschnitt L-artigen Ringe (26, 27) in axialer Richtung, mit seiner der Lagerhülse (21) abgekehrten Seite, an einen dem radial abstützenden Teil (22) der Halterung (2) angearbeiteten Ring (28) grenzt.

7. Lager nach einem der Ansprüche 1 bis 6, dadurch gekennzeichnet, dass die Lagerhülsen (21, 31) aus SiC (Silizium-Karbid) gefertigt sind.

8. Lager nach einem der Ansprüche 1 bis 6, dadurch gekennzeichnet, dass die Lagerhülsen (21, 31) aus Sinterkeramik wie EKasic D gefertigt sind.

9. Lager nach Anspruche 7 oder 8, dadurch gekennzeichnet, dass die Halterung (2) aus einer Fe-Ni-Legierung, vorzugsweise 58 Fe - 42 Ni gefertigt ist.

10. Pumpe mit einer Welle, die mit mindestens einem Lager (12) nach einem der Ansprüche 1 bis 9 gelagert ist.

11. Verwendung der Pumpe nach Anspruch 10 zum Fördern von heissen Fördermedien.

12. Verwendung der Pumpe nach Anspruch 10 zum Fördern von Fördermedien mit einer Temperatur von bis zu 300°C.

## Claims

1. A bearing (12) with a shaft (1) or a spindle, with a mounting (2) for at least one lining (21) for the bearing (12), the mounting (2) being annular and the liner having annular radial support on the mounting (2) in the axial central zone (25) and, on each side, with axial spacing from this central zone (25), the mounting (2) has annular radial support (23, 24) on the mounted shaft (1) or spindle, and the mounting (2) axially supports and retains the two lateral ends of the liner (21), characterised in that the mounting (2) consists of a single material or a number of different materials whose heat expansion coefficient(s) at least in the range of the working temperature from 0̸°C to 30̸0̸°C is/are equal to or so different from that of the material of the liner (21) that the ratio of the heat expansion coefficient of the liner (21) to the mounting (2) is not less than 0̸.8, and the heat expansion coefficient of the material of the shaft (1) or spindle is greater than that of the material of the mounting (2) and that of the liner (21).

2. A bearing according to claim 1, characterised in that at least one annular part (61) of the mounting (6) is, when assembled, as considered in an axial section in the axial direction, curved with convexity radially outwards at least once at the working temperature (Fig. 2).

3. A bearing according to claim 1 or 2 characterised in that the two laterally bearing parts (26, 27) of the mounting (2) are each embodied by a ring (26, 27) which is L-shaped in axial section.

4. A bearing according to claim 3, characterised in that the two rings (26, 27) of L-like axial section between which the liner (21) is disposed are disposed between retaining rings (28, 29) on the part (22) of the mounting (2) bearing radially on the shaft (1).

5. A bearing according to claim 4, characterised in that at last one of the rings (29) is screwed axially on to the supporting part (22) of the retaining means (2).

6. A bearing according to claim 3 or 4, characterised in that at least one of the rings (26, 27) of L-like axial section is axially adjacent, by way of its side remote from the liner (21), to a ring (28) fashioned on the radially supporting part (22) of the mounting (2).

7. A bearing according to any of claims 1 to 6, characterised in that the liners (21, 31) are made from SiC (silicon carbide).

8. A bearing according to any of claims 1 to 6, characterised in that the liners (21, 31) are made from sintered ceramics such as EKasic D.

9. A bearing according to claim 7 or 8, characterised in that the mounting (2) is made from an Fe-Ni alloy preferably 58 Fe - 42 Ni.

10. A pump with a shaft mounted by at least one bearing (12) according to any of claims 1 to 9.

11. Use of the pump according to claim 10̸ for conveying hot media.

12. Use of the pump according to claim 10̸ for media conveyed at a temperature of up to 30̸0̸°C.

## Revendications

1. Palier (12) et arbre (1) ou axe, comprenant un support (2) d'au moins un manchon (21) du palier (12), le support (2) étant annulaire et le manchon (21) prenant appui radialement dans la partie axialement médiane (25) sur le support (2) à la manière d'un anneau et le support (2) prenant appui (23, 24) radialement à la manière d'un anneau sur l'arbre (1) ou axe supporté, à distance axiale sur chacun des côtés de cette partie médiane (25), le support (2) formant un appui axial pour, et fixant, les deux extrémités latérales du manchon (21), caractérisé en ce que le support (2) est en un unique ou en plusieurs matériaux différents dont le coefficient de dilatation thermique est égal ou différent de celui du matériau du manchon (21) au moins dans la plage de la température de travail de 0°C à 300°C de manière que le rapport du coefficient de dilatation thermique du manchon (21) à celui du support (2) ne soit pas inférieur à 0,8, le coefficient de dilatation thermique du matériau de l'arbre (1) ou axe étant supérieur à celui du matériau du support (2) et à celui du manchon (21).

2. Palier selon la revendication 1, caractérisé en ce qu'au moins une partie annulaire (61) du support (6) monté prend au moins simplement une courbure convexe radialement vers l'extérieur (figure 2) en coupe axiale et observée dans la direction de l'axe, à la température de service.

3. Palier selon l'une des revendications 1 ou 2, caractérisé en ce que chacune des deux parties (26, 27) d'appui latéral du support (2) est formée d'un anneau (26, 27) de forme en L en coupe axiale.

4. Palier selon la revendication 3, caractérisé en ce que les deux anneaux (26, 27) en L en coupe axiale, entre lesquels le manchon (21) du palier est disposé, sont disposés entre les anneaux de retenue (28, 29) sur la partie (22) du support (2) qui prend appui radialement sur l'arbre (1).

5. Palier selon la revendication 4, caractérisé en ce qu'au moins l'un des anneaux de retenue (29) est vissé en direction axiale sur la partie (22) de soutien du support (2).

6. Palier selon la revendication 3 ou 4, caractérisé en ce qu'au moins l'un des anneaux en L en coupe axiale (26, 27) délimite en direction axiale, par son côté tourné à l'opposé de celui du manchon (21), un anneau (28) usiné sur la partie (22) du support (2) qui forme un soutien radial.

7. Palier selon l'une des revendications 1 à 6, caractérisé en ce que les manchons (21, 31) du palier sont réalisés en SiC (carbure de silicium).

8. Palier selon l'une des revendications 1 à 6, caractérisé en ce que les manchons (21, 31) du palier sont réalisés en céramique frittée telle que EKasic D.

9. Palier selon la revendication 7 ou 8, caractérisé en ce que le support (2) est réalisé en un alliage de Fe-Ni, de préférence de 58 Fe - 42 Ni.

10. Pompe comprenant un arbre qui est monté dans au moins un palier (12) selon l'une des revendications 1 à 9.

11. Utilisation de la pompe selon la revendication 10 pour le transport de fluides chauds.

12. Utilisation de la pompe selon la revendication 10 pour le transport de fluides dont la température atteint 300°C.
